# EUROPEAN PATENT APPLICATION

(11) **EP 4 542 910 A1**
(43) Date of publication of application: **23.04.2025**
(21) Application number: 23869920.1
(22) Date of filing: 14.07.2023
(51) Int. Cl.: H04L 5/00, H04W 52/02

(54) **WAKE-UP SIGNAL SENDING METHOD, WAKE-UP SIGNAL RECEIVING METHOD, APPARATUS AND STORAGE MEDIUM**

(30) Priority: 30.09.2022 CN 202211212960
(71) Applicant: ZTE Corporation, Shenzhen, Guangdong 518057 (CN)
(72) Inventor: YANG, Weiwei, Shenzhen, Guangdong 518057 (CN); DAI, Bo, Shenzhen, Guangdong 518057 (CN); LIU, Kun, Shenzhen, Guangdong 518057 (CN); CHEN, Mengzhu, Shenzhen, Guangdong 518057 (CN); HU, Youjun, Shenzhen, Guangdong 518057 (CN)
(74) Representative: Ziebig Hengelhaupt Intellectual Property Attorneys Patentanwaltskanzlei PartGmbB
(86) International application number: PCT/CN2023/107565
(87) International publication number: WO 2024/066673

(57) **Abstract**

A wake-up signal sending method, comprising: a base station generating a wake-up signal, the wake-up signal comprising a wake-up preamble and wake-up data; and the base station sending the wake-up signal.

## Description

This application claims the priority of the Chinese Patent Application No. 202211212960.5, filed on September 30, 2022, the entire content of which is incorporated herein by reference.

### TECHNICAL FIELD

The present disclosure relates to the field of communication technologies, and in particular, to a wake-up signal sending method, a wake-up signal receiving method, an apparatus, and a storage medium.

### BACKGROUND

In order to extend the battery life of a terminal, the 3rd generation partnership project (3GPP) considers to introduce a low power wake-up signal (low power wake up signal, LP-WUS) mechanism in the Release 18, that is, a separate receiver is used by the terminal to receive or detect a wake-up signal. The terminal that has received or detected the wake-up signal wakes up a main receiver and receives data by the main receiver. When the terminal has not detected the wake-up signal, the main receiver of the terminal is in a deep sleep state or in an off-state. Thus, power consumption of the terminal may be further reduced. However, a specific structure of the wake-up signal in the LP-WUS mechanism has not been determined.

### SUMMARY

In one aspect, a wake-up signal sending method is provided, and includes: generating a wake-up signal, where the wake-up signal includes a wake-up preamble and wake-up data; and sending the wake-up signal.

In another aspect, a wake-up signal receiving method is provided, and includes: receiving a wake-up signal by a first receiver, where the wake-up signal includes a wake-up preamble and wake-up data; and determining a working mode of a second receiver according to the wake-up signal.

In yet another aspect, a base station is provided, and includes a processing module and a communication module. The processing module is configured to generate a wake-up signal, where the wake-up signal includes a wake-up preamble and wake-up data. The communication module is configured to send the wake-up signal.

In yet another aspect, a terminal is provided, and includes a communication module and a processing module. The communication module is configured to receive a wake-up signal by a first receiver, where the wake-up signal includes a wake-up preamble and wake-up data. The processing module is configured to determine a working mode of a second receiver according to the wake-up signal.

In yet another aspect, a communication apparatus is provided, and includes a processer. The processor, when executing a computer program, implements the wake-up signal sending method or the wake-up signal receiving method mentioned above.

In yet another aspect, a computer-readable storage medium is provided, and the computer-readable storage medium includes computer instructions. Herein, the computer instructions, when being executed, implement the wake-up signal sending method mentioned above or implement the wake-up signal receiving method mentioned above.

### BRIEF DESCRIPTION OF THE DRAWINGS

FIG. 1 is a schematic diagram of an architecture of a communication system provided according to the embodiments of the present disclosure.
FIG. 2 is a schematic flowchart of a wake-up signal sending method provided according to the embodiments of the present disclosure.
FIG. 3 is a structural schematic diagram of a wake-up signal provided according to the embodiments of the present disclosure.
FIG. 4 is a structural schematic diagram of wake-up data provided according to the embodiments of the present disclosure.
FIG. 5 is a structural schematic diagram of another wake-up signal provided according to the embodiments of the present disclosure.
FIG. 6(a) is a structural schematic diagram of yet another wake-up signal provided according to the embodiments of the present disclosure.
FIG. 6(b) is a structural schematic diagram of yet another wake-up signal provided according to the embodiments of the present disclosure.
FIG. 7(a) is a structural schematic diagram of yet another wake-up signal provided according to the embodiments of the present disclosure.
FIG. 7(b) is a structural schematic diagram of yet another wake-up signal provided according to the embodiments of the present disclosure.
FIG. 8 is a structural schematic diagram of yet another wake-up signal provided according to the embodiments of the present disclosure.
FIG. 9 is a structural schematic diagram of yet another wake-up signal provided according to the embodiments of the present disclosure.
FIG. 10 is a structural schematic diagram of yet another wake-up signal provided according to the embodiments of the present disclosure.
FIG. 11 is a structural schematic diagram of yet another wake-up signal provided according to the embodiments of the present disclosure.
FIG. 12 is a structural schematic diagram of a base station provided according to the embodiments of the present disclosure.
FIG. 13 is a structural schematic diagram of a terminal provided according to the embodiments of the present disclosure.
FIG. 14 is a structural schematic diagram of a communication apparatus provided according to the embodiments of the present disclosure.

### DETAILED DESCRIPTION

Technical solutions in the embodiments of the present disclosure will be described clearly and completely below in conjunction with the drawings in the embodiments of the present disclosure. Obviously, the described embodiments are merely a part but not all of the embodiments of the present disclosure. All other embodiments obtained based on the embodiments of the present disclosure by the ordinary skilled in the art without making any creative effort shall belong to the protection scope of the present disclosure.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more. Words, such as "first", "second", etc., do not limit a number and an execution order, and those defined by the words, such as "first", "second", etc., are not necessarily different from each other.

It should be noted that in the present disclosure, words, such as "exemplarily" or "for example", etc., are used to represent an example, illustration, or explanation. Any embodiment or design solution described as "exemplarily" or "for example", etc., in the present disclosure should not be construed as preferred or advantageous over other embodiments or design solutions. Rather, the usage of words such as "exemplarily" or "for example", etc., is intended to present relevant concepts in a specific manner.

In the embodiments of the present disclosure, an "indication/indicating/indicated" or variants thereof may include a direct indication and an indirect indication. For example, taking first control information in the following as an example, the first control information may directly carry information A itself or an index of the information A, to achieve the purpose of directly indicating the information A. Alternatively, the first control information may also carry information B associated with the information A, thereby achieving the purpose of indirectly indicating the information A while indicating the information B.

The technical solutions provided in the embodiments of the present disclosure may be applied to various communication systems, such as, a new radio (New Radio, NR) communication system adopting the 5G (5th generation) communication technology, a future evolved system, or a multi-communication fusion system, etc.

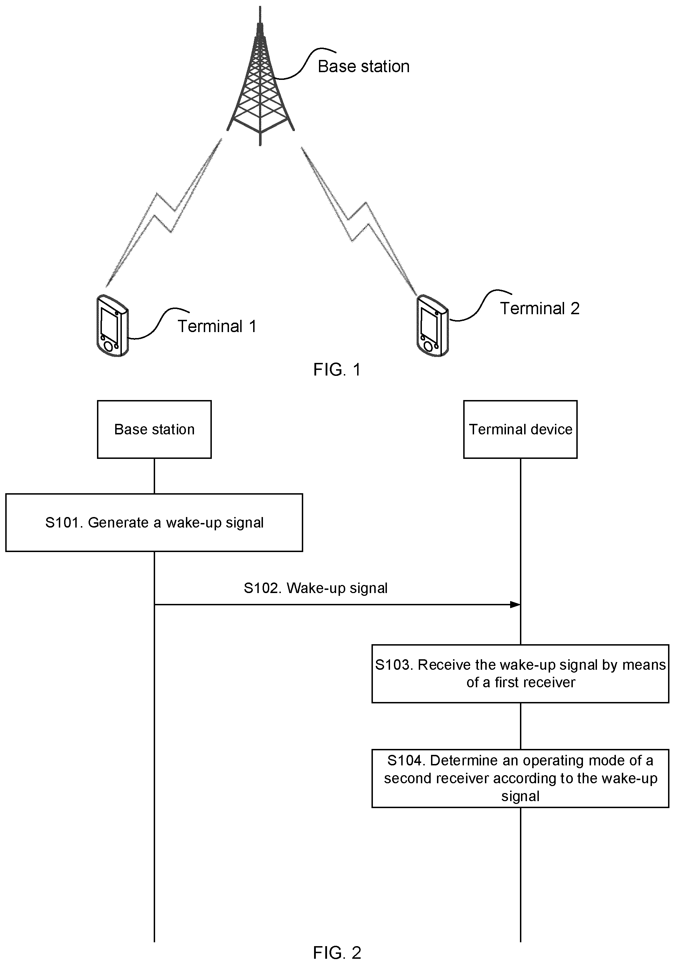

Exemplarily, a structural schematic diagram of a communication system provided in the embodiments of the present disclosure is illustrated in FIG. 1. The communication system may include a base station and a plurality of terminals (e.g., a terminal 1 and a terminal 2 shown in FIG. 1), and the base station may be communicatively connected with the one or more terminals.

The base station may be used to implement functions, such as resource scheduling, radio resource management, radio access control of the terminal, etc. The base station may be a small base station, a wireless access point, a transmission reception point (TRP), a transmission point (TP), and any node of some other access nodes.

The terminal may be a terminal device, or a device having a function of a terminal. The terminal may also be referred to as a user equipment (UE), a mobile station, a mobile terminal, etc. The terminal may be a mobile phone, a tablet computer, a computer with a wireless transceiving function, a virtual reality terminal, an augmented reality terminal, a wireless terminal in industrial control, a wireless terminal in unmanned driving, a wireless terminal in remote surgery, a wireless terminal in transportation safety, a wireless terminal in a smart city, a wireless terminal in a smart home, etc. The embodiments of the present disclosure do not limit the specific device form adopted by the terminal.

In some embodiments, the terminal may be provided with a first receiver and a second receiver. Optionally, power consumption of the first receiver in an on-state is much smaller than power consumption of the second receiver in an on-state. The first receiver may have other names, such as a wake-up circuit, a low-power consumption small circuit, a wake-up module, etc. The second receiver may have other names, such as a main receiving circuit, a main receiving module, a main receiving unit, etc., which is not limited thereto. In the embodiments of the present disclosure, the first receiver is mainly used to support the terminal to receive a signal related to waking up. The second receiver is used to receive data and/or transmit data.

In some embodiments, the terminal turns on the first receiver only, and then, turns on the second receiver after receiving a wake-up signal for waking up the terminal itself by the first receiver. If the terminal does not receive the wake-up signal, the terminal does not turn on the second receiver (at this time, a state of the terminal may be referred to as a wake-up state, an LP-WUS state, an LP-WUS detection state, or may be referred to as other names). Thus, the power consumption of the terminal may be reduced.

It should be noted that FIG. 1 is only an exemplary framework diagram, and the number of devices included in FIG. 1 and names of the devices are not limited. In addition to the devices shown in FIG. 1, the communication system may further include other devices, such as a core network device.

Application scenarios of the embodiments of the present disclosure are not limited. The system architecture and business scenarios described in the embodiments of the present disclosure are intended to explain the technical solutions of the embodiments of the present disclosure more clearly, and do not constitute a limitation on the technical solutions provided in the embodiments of the present disclosure. Those ordinary skilled in the art may know that, with the evolution of the network architecture and the emergence of new business scenarios, the technical solutions provided in the embodiments of the present disclosure are also applicable to similar technical problems.

As shown in FIG. 2, the embodiments of the present disclosure provide a wake-up signal transmitting method, and the method includes the following steps (S101 to S104).

In S101, a base station generates a wake-up signal.

The wake-up signal is a signal for waking up a terminal in a sleep state. For example, when a system message is changed, the base station may generate and send the wake-up signal, to wake up respective terminals to receive the changed system message. For another example, after data from a certain terminal (e.g., a terminal A) arrives at the base station, the base station may generate and send a wake-up signal, to wake up the terminal A to enter a connected state for receiving data. For another example, when the terminal has finished sending and receiving data and enters the sleep state, the terminal turns off the second receiver and turns on only the first receiver in a low-power consumption mode; or in a case where a condition for turning off the second receiver is met after a certain duration of measurement, the terminal turns off the second receiver and turns on only the first receiver in a low-power consumption mode.

Optionally, the wake-up signal in the embodiments of the present disclosure may have other names, such as a wake-up unit, a wake-up frame, etc., which is not limited thereto.

In some embodiments, the wake-up signal includes a wake-up preamble. The wake-up preamble may be used to assist the receiver of the terminal to perform time and frequency synchronization. Optionally, a bit sequence adopted by the wake-up preamble may be defined in the standard; or, a bit sequence adopted by the wake-up preamble may also be determined by the base station; or, a bit sequence adopted by the wake-up preamble may also be determined by negotiation between the base station and the terminal. In addition to assisting the terminal to perform time and frequency synchronization, the wake-up preamble may further carry relevant indication information of wake-up data.

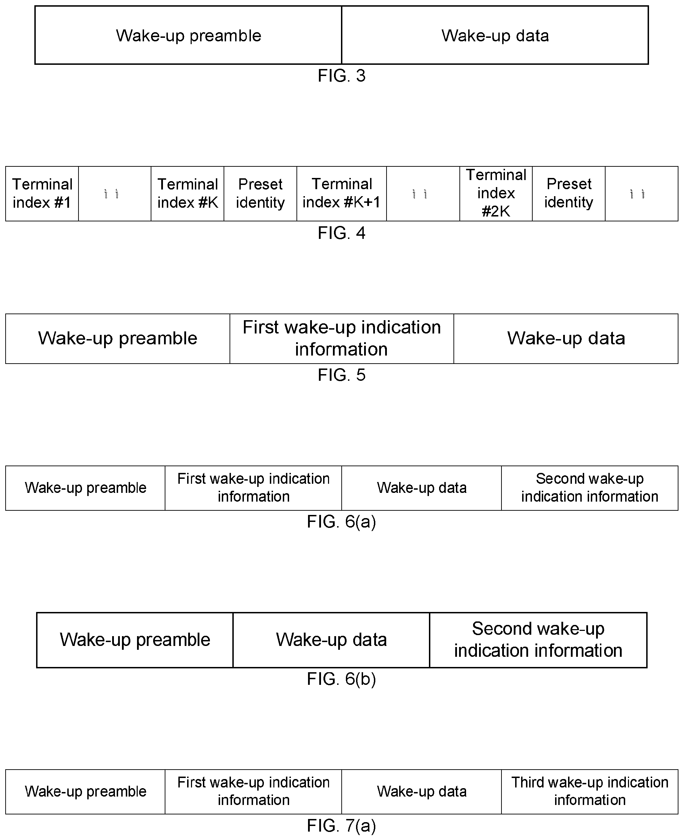

In some embodiments, the wake-up signal may further include wake-up data in addition to the wake-up preamble. Exemplarily, as shown in FIG. 3, in the wake-up signal, the wake-up preamble is mapped before the wake-up data, so that the terminal may prepare to receive the wake-up data after receiving the wake-up preamble. It should be understood that in the structure of the wake-up signal shown in FIG. 3, the wake-up preamble may be used to indicate a starting position of the wake-up data.

In some embodiments, the wake-up data includes at least one of information as follows: short information, a terminal index, a group index, a cell index, or a data content indication.

The following introduces the information carried in the wake-up data.

### (1) Short information

The short information includes at least one of types as follows: a system message change indication, a warning information indication, or a stop detection indication. The system message change indication is used to indicate that a system message is changed. The warning information indication is used to indicate to receive warning information. The stop detection indication is used to indicate to stop detecting the wake-up signal (in an unlicensed spectrum).

Exemplarily, the warning information may be warning information for natural disasters or emergency events, for example, the warning information may be information of an earthquake and tsunami warning system (ETWS) or information of a common alert system (commercial mobile alert system, CMAS).

As a possible implementation, the wake-up data may include at least one of: an indication bit corresponding to the system message change indication, an indication bit corresponding to the warning information indication, and an indication bit corresponding to the stop detection indication.

The indication bit corresponding to the system message change indication may be implemented with one bit. A value 0 of this bit represents that the wake-up data does not carry the system message change indication; and a value 1 of this bit represents that the wake-up data carries the system message change indication.

The indication bit corresponding to the warning information indication may be implemented with one bit. A value 0 of this bit represents that the wake-up data does not carry the warning information indication; and a value 1 of this bit represents that the wake-up data carries the warning information indication.

The indication bit corresponding to the stop detection indication may be implemented with one bit. A value 0 of this bit represents that the wake-up data does not carry the stop detection indication; and a value 1 of this bit represents that the wake-up data carries the stop detection indication.

As another possible implementation, the wake-up data may include an indication bit corresponding to the short information. The indication bit corresponding to the short information may be implemented with multiple bits. Taking the indication bit corresponding to the short information being implemented with 2 bits as an example, a value 00 of the indication bit corresponding to the short information is a reserved value; a value 01 of the indication bit corresponding to the short information represents that the wake-up data carries the system message change indication; a value 10 of the indication bit corresponding to the short information represents that the wake-up data carries the warning information indication; and a value 11 of the indication bit corresponding to the short information represents that the wake-up data carries the stop detection indication.

### (2) Terminal index

The terminal index is used to identify a terminal. Optionally, the terminal index may include any one of: all or a part of bits of a 5G-shortened form-temporary mobile subscriber identity (5G-Shortened form-Temporary Mobile Subscriber Identity, 5G-S-TMSI), all or a part of bits of a 5G-temporary mobile subscriber identity (5G-Temporary Mobile Subscriber Identity, 5G-TMSI), all or a part of bits of a radio network temporary identity (Radio Network Temporary Identity, RNTI), or a wake-up identity.

The RNTI includes any one of: a wake-up-specific RNTI, a UE-specific RNTI, a UE-specific RNTI for waking up, a UE-specific RNTI for an idle state, a UE-specific RNTI used in an idle state in a most recently connected cell, a UE-specific RNTI used for waking up in a most recently connected cell, or an inactive RNTI.

Optionally, 5G-S-TMSI and 5G-TMSI may be configured for the terminal by a mobile management network element. The RNTI may be configured for the terminal by the base station. The wake-up identity may be configured for the terminal device by a core network. It should be understood that the various types of the configuration for the terminal index mentioned above are merely exemplary, which is not limited in the embodiments of the present disclosure.

In some embodiments, when the wake-up data includes N terminal indexes, the N terminal indexes may be arranged according to a preset rule. For example, the N terminal indexes are arranged in an order of index values from large to small, or in an order of index values from small to large.

### (3) Group index

The group index is used to identify a group, and the group may include one or more terminal devices. In some embodiments, a grouping type of the group may include one or more of: grouping based on a core network (CN), grouping based on a preset terminal index, or grouping based on a CN and a preset terminal index. The preset terminal index may be configured by the base station, or may be negotiated between the base station and the terminal device, or may be calculated according to the terminal index.

### (4) Cell index

The cell index is used to identify a cell. The cell in the embodiments of the present disclosure may be a macro cell, a micro cell, an indoor cell, etc., which is not limited thereto. In some embodiments, the cell index includes all or a part of bits of a base station identity, or all or a part of bits of a physical layer cell identity (Physical Cell Id, PCI).

### (5) Data content indication

In some embodiments, the data content indication includes at least one of types as follows: a data transmission format indication, a data type indication, a data length indication, a terminal index number indication, a grouping type indication corresponding to a group index, a data repetition number indication, a data bitrate indication, a data modulation scheme indication, or a data transmission rate indication.

The data transmission format indication is used to indicate a transmission format of the wake-up data.

The data type indication is used to indicate a data type in the wake-up data.

The data length indication is used to indicate a length of the wake-up data.

The terminal index number indication is used to indicate a number of terminal indexes carried in the wake-up data.

The grouping type indication corresponding to the group index is used to indicate a grouping type to which the group index in the wake-up data belongs.

The data repetition number indication is used to indicate a repetition number of information in the wake-up data.

The data bitrate indication is used to indicate a transmission bitrate of the wake-up data.

The data modulation scheme indication is used to indicate a modulation scheme adopted by the wake-up data.

The data transmission rate indication is used to indicate a transmission rate of the wake-up data.

The above is an introduction to the information carried in the wake-up data. It should be understood that the wake-up data may further carry other types of information in addition to the short information, the terminal index, the group index and the cell index, which is not limited in the embodiments of the present disclosure.

In some embodiments, the information in the wake-up data may be mapped according to priorities.

Exemplarily, an order of the priorities from high to low is: the short information, the cell index, the group index, and the terminal index.

Exemplarily, an order of the priorities from high to low is: the short information, and the terminal index.

Exemplarily, an order of the priorities from high to low is: the short information, and the terminal index.

Exemplarily, an order of the priorities from high to low is: the short information, the group index, and the terminal index.

Exemplarily, an order of the priorities from high to low is: the data content indication, the short information, the group index, and the terminal index.

Exemplarily, an order of the priorities from high to low is: the data content indication, the short information, and the terminal index.

Exemplarily, an order of the priorities from high to low is: the data content indication, and the terminal index.

Exemplarily, an order of the priorities from high to low is: the data content indication, the short information, the cell index, the group index, and the terminal index.

In some embodiments, the wake-up data further includes at least one of: an interval identity, an ending identity, a sub-preamble, or a check code. The sub-preamble is used to assist the terminal to perform synchronization for the wake-up data. The interval identity is used to space different parts of contents in the wake-up data. The ending identity is used to indicate an ending position of the wake-up data, or an ending position of a specific content in the wake-up data. The check code is used to check the wake-up data.

In some embodiments, as shown in FIG. 4, in a case where the wake-up data includes N terminal indexes, there is at least one of the interval identity, the ending identity or the check code spacing every K terminal indexes in the wake-up data, N is greater than or equal to K, and both N and K are positive integers. A value of K may be predetermined, or determined according to a value of N. Optionally, a length of the identity may be fixed to Y bits. In this way, a plurality of terminal indexes are partitioned by the identity, so that even if K terminal indexes before the identity have problems such as missing bits due to factors such as interference, parsing of terminal indexes after the identity by the terminal device will not be affected. In this way, in a case where the wake-up data carries the plurality of terminal indexes, a success rate of parsing the terminal indexes in the wake-up data by the terminal device may be guaranteed, thereby reducing the increase in power consumption caused by false waking up.

In some embodiments, in a case where a length of the wake-up data is limited, the base station may determine the information carried in the wake-up data according to priorities of various types of information and lengths of the various types of information.

For example, if the length of the wake-up data is M bits, and the length of the terminal index is X bits, and in a case where the wake-up data needs to carry the terminal indexes, the wake-up data carries at most floor(M/X) terminal indexes. floor() represents round down.

For another example, if the length of the wake-up data is M bits, the length of the terminal index is X bits, the length of a preset identity is Y bits, and the number of preset identities is y, and in a case where the wake-up data needs to carry the terminal indexes and the preset identities, the wake-up data carries floor(M/(X+Y*y)) terminal indexes. Herein, the preset identity is the interval identity.

For another example, the length of the wake-up data is M bits, the length of the terminal index is X bits, the length of the preset identity is Y bits, the number of preset identities is y, and the length of the short information is 3 bits. In a case where the short information and the terminal indexes need to be sent, since the priority of the short information is higher than that of the terminal index, the wake-up data carries at most floor((M-3)/(X+Y*y)) terminal indexes on the basis of carrying the short information.

For another example, the length of the wake-up data is M bits, the length of the terminal index is X bits, the length of the short information is 3 bits, and the length of the cell index is 6 bits. Assuming that the information to be sent includes the short information, the cell index and K terminal indexes, since both the priority of the short information and the priority of the cell index are higher than the priority of the terminal index, the wake-up data carries at most K1=floor((M-9)/(X)) terminal indexes. In this way, in a case where K1 is greater than or equal to K, the wake-up data includes the short information, the cell index and K terminal indexes. In a case where K1 is smaller than K, the wake-up data includes the short information, the cell index and K1 terminal indexes, and the K1 terminal indexes are selected from the K terminal indexes mentioned above. For example, the K1 terminal indexes may be first K1 terminal indexes corresponding to first K1 index values in the K terminal indexes in a case where index values are arranged from large to small; or, the K1 terminal indexes may be first K1 terminal indexes corresponding to first K1 index values in the K terminal indexes in a case where index values are arranged from small to large; or, the K1 terminal indexes are randomly selected from the K terminal indexes.

Optionally, the information carried in the wake-up data may be indicated in an explicit scheme or an implicit scheme. In this way, on the one hand, the terminal device may know the type and the number of information, etc., carried in the wake-up data before receiving the wake-up data, thereby well preparing for correctly parsing the wake-up data, to guarantee the success rate of parsing the wake-up data. On the other hand, in the wake-up data, bits for carrying information may be increased or reduced according to actual needs, which is beneficial to save the transmission overhead of the wake-up data.

In some embodiments, the implicit scheme for the indication may be implemented as that: the length and/or the bit sequence of the wake-up preamble is used to indicate the information carried in the wake-up data. For example, it may be pre-specified that: the short information is carried in the wake-up data corresponding to the length of the wake-up preamble being a first length; the terminal index is carried in the wake-up data corresponding to the length of the wake-up preamble being a second length; the group index is carried in the wake-up data corresponding to the length of the wake-up preamble being a third length; and the cell index is carried in the wake-up data corresponding to the length of the wake-up preamble being a fourth length. For another example, it may be pre-specified that: the short information is carried in the wake-up data corresponding to a first bit sequence adopted by the wake-up preamble; the terminal index is carried in the wake-up data corresponding to a second bit sequence adopted by the wake-up preamble; the group index is carried in the wake-up data corresponding to a third bit sequence adopted by the wake-up preamble; and the cell index is carried in the wake-up data corresponding to a fourth bit sequence adopted by the wake-up preamble. It should be understood that the examples mentioned above do not constitute a limitation on the correspondence between the information carried in the wake-up data, and the length and/or the bit sequence of the wake-up preamble.

In some embodiments, the explicit scheme for the indication may be implemented as that: the wake-up signal further includes first wake-up indication information, and the first wake-up indication information is used to indicate the information carried in the wake-up data. As shown in FIG. 5, in the wake-up signal, the first wake-up indication information may be mapped after the wake-up preamble and before the wake-up data. It should be understood that in the structure of the wake-up signal shown in FIG. 5, the wake-up preamble may be used to indicate a starting position of the first wake-up indication information. Optionally, a number of bits of the first wake-up indication information is fixed. In this way, after parsing the wake-up preamble from the wake-up signal, the terminal device may naturally know the starting position of the first wake-up indication information and the starting position of the wake-up data. It should be understood that the number of bits of the first wake-up indication information may be configured by the base station, or specified in the standard.

As a possible implementation, the first wake-up indication information includes at least one of first indication information, second indication information, third indication information, fourth indication information, fifth indication information, sixth indication information or seventh indication information.

The first indication information is used to indicate whether the wake-up data carries the short information. The first indication information may also be referred to as an indication bit for the short information. Exemplarily, the first indication information may be implemented with one bit. For example, a value 0 of this bit is used to indicate that the wake-up data does not carry the short information; and a value 1 of this bit is used to indicate that the wake-up data carries the short information.

The second indication information is used to indicate whether the wake-up data carries the terminal index. The second indication information may also be referred to as an indication bit for the terminal index. Exemplarily, the second indication information may be implemented with one bit. For example, a value 0 of this bit is used to indicate that the wake-up data does not carry the terminal index; and a value 1 of this bit is used to indicate that the wake-up data carries the terminal index.

The third indication information is used to indicate whether the wake-up data carries the group index. The third indication information may also be referred to as an indication bit for the group index. Exemplarily, the third indication information may be implemented with one bit. For example, a value 0 of this bit is used to indicate that the wake-up data does not carry the group index; and a value 1 of this bit is used to indicate that the wake-up data carries the group index.

The fourth indication information is used to indicate whether the wake-up data carries the cell index. The fourth indication information may also be referred to as an indication bit for the cell index. Exemplarily, the fourth indication information may be implemented with one bit. For example, a value 0 of this bit is used to indicate that the wake-up data does not carry the cell index; and a value 1 of this bit is used to indicate that the wake-up data carries the cell index.

The fifth indication information is used to indicate a type of the short information carried in the wake-up data. The fifth indication information may also be referred to as an indication bit for the type of the short information. A length of the fifth indication information is related to a maximum number of types of the short information.

The sixth indication information is used to indicate a number of terminal indexes carried in the wake-up data. The sixth indication information may also be referred to as an indication bit for the number of terminal indexes. A length of the sixth indication information is related to a maximum number of terminal indexes carried in the wake-up data. Optionally, the maximum number of terminal indexes carried in the wake-up data may be preset. Exemplarily, the maximum number of terminal indexes carried in the wake-up data is 7, and the length of the sixth indication information is 3 bits.

The seventh indication information is used to indicate a grouping type corresponding to the group index carried in the wake-up data. A length of the seventh indication information is related to a number of grouping types. For example, if the number of grouping types is 3, the length of the seventh indication information is 2 bits. Exemplarily, Table 1 shows a correspondence between a value of the seventh indication information and the grouping type.

**Table 1**

| Value of seventh indication information | Grouping type |
|---|---|
| 00 | Reserved |
| 01 | Grouping based on a CN |
| 10 | Grouping based on a preset terminal index |
| 11 | Grouping based on a CN and a preset terminal index |

As another possible implementation, the first wake-up indication information includes eighth indication information, and there is a correspondence between a value of the eighth indication information and an information combination of the wake-up data. The information combination includes at least one of the short information, the terminal index, the group index or the cell index. Exemplarily, Table 2 shows a possible implementation of the information combination.

**Table 2**

| | Information combination transmitted on wake-up data |
|---|---|
| 1 | Short information |
| 2 | One terminal index |
| 3 | N terminal indexes |
| 4 | Cell index |
| 5 | Group index based on CN grouping |
| 6 | Group index based on preset terminal index grouping |
| 7 | Group index based on CN grouping and preset terminal index grouping |
| 8 | Short information, and one terminal index |
| 9 | Short information, and N terminal indexes |
| 10 | Short information, and group index based on CN grouping |
| 11 | Short information, and group index based on preset terminal index grouping |
| 12 | Short information, and group index based on CN grouping and preset terminal index grouping |
| 13 | Cell index, and one terminal index |
| 14 | Cell index, and N terminal indexes |
| 15 | Cell index, and group index based on CN grouping |
| 16 | Cell index, and group index based on preset terminal index grouping |
| 17 | Cell index, and group index based on CN grouping and preset terminal index grouping |
| 18 | Group index based on CN grouping, and one terminal index |
| 19 | Group index based on CN grouping, and N terminal indexes |
| 20 | Group index based on CN grouping and preset terminal index grouping, and one terminal index |
| 21 | Group index based on CN grouping and preset terminal index grouping, and N terminal indexes |
| 22 | Short information, cell index, and one terminal index |
| 23 | Short information, cell index, and N terminal indexes |
| 24 | Short information, cell index, and group index based on CN grouping |
| 25 | Short information, cell index, and group index based on preset terminal index grouping |
| 26 | Short information, cell index, and group index based on CN grouping and preset terminal index grouping |
| 27 | Cell index, group index based on CN grouping, and one terminal index |
| 28 | Cell index, group index based on CN grouping, and N terminal indexes |
| 29 | Short information, cell index, group index based on CN grouping, and one terminal index |
| 30 | Short information, cell index, group index based on CN grouping, and |
| | N terminal indexes |
| 31 | wake-up data not sent |
| ... ... | ... ... |

As an example, Table 3 shows a correspondence between a value of the eighth indication information and an information combination of the wake-up data.

**Table 3**

| Value of eighth indication information | Information combination |
|---|---|
| 00 | Reserved |
| 01 | Short information |
| 10 | One terminal index |
| 11 | Short information and one terminal index |

As another example, Table 4 shows another correspondence between a value of the eighth indication information and an information combination of the wake-up data.

**Table 4**

| Value of eighth indication information | Information combination |
|---|---|
| 00 | Reserved |
| 01 | Short information |
| 10 | Cell index and one terminal index |
| 11 | Short information, cell index, and one terminal index |

In some embodiments, the data content indication and the short information may be jointly indicated in the wake-up data. Based on this, as another example, Table 5 shows another correspondence between a value of the eighth indication information and an information combination of the wake-up data.

**Table 5**

| Value of eighth indication information | Information combination |
|---|---|
| 00 | Reserved |
| 01 | Data content indication |
| 10 | Short information |
| 11 | Data content indication, and short information |

As yet another possible implementation, the first wake-up indication information includes ninth indication information. There is a correspondence between a value of the ninth indication information and a transmission format of the wake-up data, and the transmission format of the wake-up data includes at least one of a transmission rate, a bitrate, a length, a repetition number, a modulation scheme or a content of the wake-up data. Exemplarily, Table 6 shows a correspondence between a value of the ninth indication information and a transmission format of the wake-up data. Both G and H are positive integers.

**Table 6**

| Value of ninth indication information | Transmission format |
|---|---|
| 00 | Reserved |
| 01 | Short information transmitted |
| 10 | Terminal index transmitted, and a total length of G |
| 11 | Short information and group index transmitted, and a total length of H |

In some embodiments, the wake-up signal may further include second wake-up indication information. The second wake-up indication information is used to indicate an ending position of the wake-up data. Exemplarily, as shown in FIG. 6 (a) or FIG. 6(b), in the wake-up signal, the second wake-up indication information is mapped after the wake-up data. It should be understood that the second wake-up indication information may be implemented with a preset bit sequence. After the terminal device parses the preset bit sequence from the wake-up signal, it may know that the reception of the wake-up data in the wake-up signal has been completed. In this way, the terminal device may determine the length of the wake-up data based on the starting position and the ending position of the wake-up data in the wake-up signal; and may parse the wake-up data correctly based on the length of the wake-up data and the lengths of various types of information in the wake-up data.

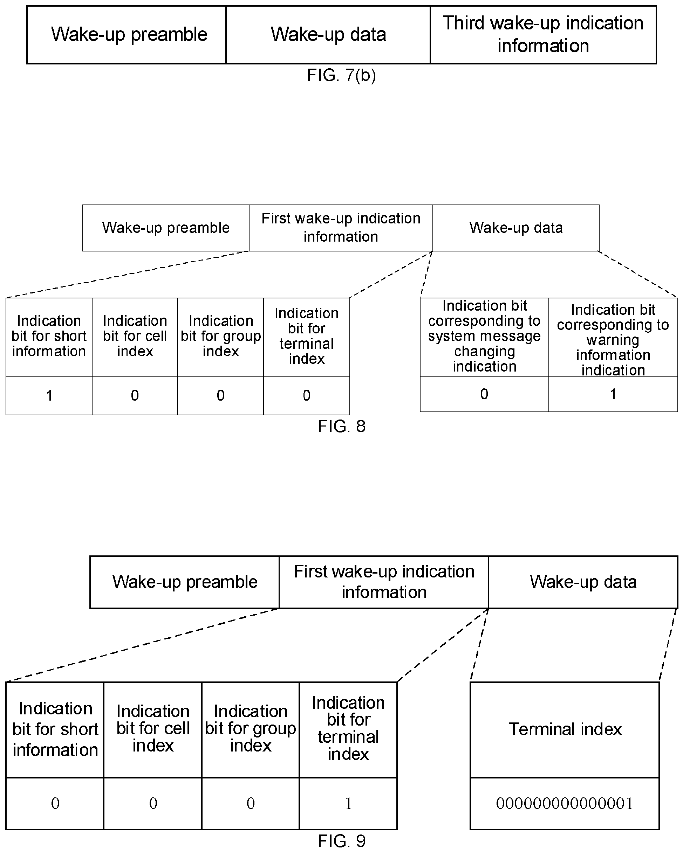

In some embodiments, the wake-up signal may further include third wake-up indication information. The third wake-up indication information is used to verify the wake-up data. The third wake-up indication information is generated based on a preset verification algorithm and the wake-up data. Exemplarily, as shown in FIG. 7(a) or FIG. 7(b), in the wake-up signal, the third wake-up indication information is mapped after the wake-up data. It should be understood that in a case where the wake-up data is determined to be incorrect by verifying the wake-up data based on the third wake-up indication information, the terminal device may ignore this wake-up signal, that is, the terminal device does not turn on the second receiver according to the relevant information in the wake-up data.

In S102, the base station sends the wake-up signal.

As a possible implementation, the base station sends the wake-up signal in a binary On-Off Keying (OOK) modulation scheme. It should be understood that the OOK modulation scheme may be adopted to reduce the implementation complexity of the receiver, which is beneficial to reduce the cost of the receiver. Other low-power consumption and low-cost modulation schemes are not excluded.

In S103, the terminal device receives the wake-up signal by a first receiver.

In some embodiments, the terminal device may determine information in the wake-up data according to priorities of the information. An introduction to the priorities may refer to the content mentioned above, which will not be repeated here.

In some embodiments, in a case where the wake-up signal includes the first wake-up indication information, the terminal device may determine the information carried in the wake-up data by the first wake-up indication information.

Optionally, in a case where the first wake-up indication information includes the first indication information, the terminal device determines whether the wake-up data carries the short information by the first indication information.

Optionally, in a case where the first wake-up indication information includes the second indication information, the terminal device determines whether the wake-up data carries the terminal index by the second indication information.

Optionally, in a case where the first wake-up indication information includes the third indication information, the terminal device determines whether the wake-up data carries the group index by the third indication information.

Optionally, in a case where the first wake-up indication information includes the fourth indication information, the terminal device determines whether the wake-up data carries the cell index by the fourth indication information.

Optionally, in a case where the first wake-up indication information includes the fifth indication information, the terminal device determines a type of the short information carried in the wake-up data by the fifth indication information.

Optionally, in a case where the first wake-up indication information includes the sixth indication information, the terminal device determines a number of terminal indexes carried in the wake-up data by the sixth indication information.

Optionally, in a case where the first wake-up indication information includes the seventh indication information, the terminal device determines a grouping type corresponding to the group index carried in the wake-up data by the seventh indication information.

Optionally, in a case where the first wake-up indication information includes the eighth indication information, the terminal device determines an information combination of the wake-up data by a value of the eighth indication information, and a correspondence between the eighth indication information and the information combination of the wake-up data.

Optionally, in a case where the first wake-up indication information includes the ninth indication information, the terminal device determines a transmission format of the wake-up data by a value of the ninth indication information, and a correspondence between the ninth indication information and the transmission format of the wake-up data.

In some embodiments, in a case where the wake-up signal includes the second wake-up indication information, the terminal device may determine an ending position of the wake-up data by the second wake-up indication information.

In some embodiments, in a case where the wake-up signal includes the third wake-up indication information, the terminal device verifies the wake-up data by the third wake-up indication information.

In some embodiments, in a case where the wake-up data includes the data content indication, the terminal device may determine information related to the wake-up data by the data content indication.

In S104, the terminal device determines a working mode of a second receiver according to the wake-up signal.

As a possible implementation, in a case where the wake-up data carries at least one of a terminal index of the terminal device itself, a cell index of a cell accessed by the terminal device, a group index of a group to which the terminal device belongs, a system message change indication, or a warning information indication, the terminal device controls the second receiver to start working.

For example, the terminal device has received the wake-up signal shown in FIG. 8, and may know, by parsing the first wake-up indication information of the wake-up signal, that the value of the indication bit for the short information in the first wake-up indication information is 1, and the values of other indication bits are 0, so that it may be determined that the wake-up data carries only the short information. In a case where the wake-up data carries only the short information, the terminal device may determine, based on a pre-configuration (e.g., the specification in the standard), that in the wake-up data, a first bit is the indication bit corresponding to the system message change indication, and a second bit is the indication bit corresponding to the warning information indication. Since in the wake-up data, the value of the first bit is 0 and the value of the second bit is 1, the terminal device may determine that the wake-up data carries the warning information indication, and the terminal device turns on the second receiver to receive the warning information.

For example, the terminal device has received the wake-up signal shown in FIG. 9, and may know, by parsing the first wake-up indication information of the wake-up signal, that in the first wake-up indication information, the value of the indication bit for the terminal index is 1, and the values of other indication bits are 0, so that it may be determined that the wake-up data carries only the terminal index. Further, the terminal device can know, by parsing the wake-up data, that the terminal index carried in the wake-up data is 000000000000001. If the terminal index of the terminal device itself is 000000000000001, the terminal device will turn on the second receiver to receive corresponding data. If the terminal index of the terminal device itself is not 000000000000001, the terminal device will keep the second receiver in an off-state.

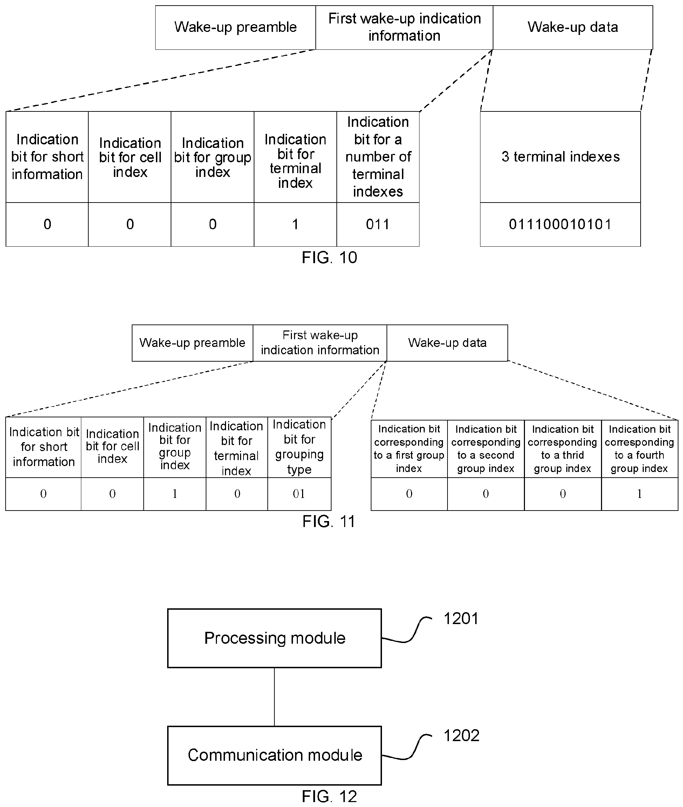

For example, the terminal device has received the wake-up signal shown in FIG. 10, and may know, by parsing the first wake-up indication information of the wake-up signal, that in the first wake-up indication information, the value of the indication bit for the terminal index is 1, and the value of the indication bit of the number of terminal indexes is 011, so that it may be determined that the wake-up data carries 3 terminal indexes. Assuming that a length of one terminal index is 4 bits, the terminal device can determine that the three terminal indexes are 0111, 0001, and 0101 respectively by parsing the wake-up data. Further, the terminal device may determine whether to turn on the second receiver according to whether the terminal index itself is one of the three terminal indexes mentioned above.

For example, the terminal device has received the wake-up signal shown in FIG. 11, and may know, by parsing the first wake-up indication information of the wake-up signal, that in the first wake-up indication information, the value of the indication bit for the group index is 1, and the value of the indication bit for the grouping type is 01, so that it may be determined that the wake-up data carries a group index based on CN grouping. Assuming that a total number of groups based on the CN grouping is 4, a corresponding indication bit may be set for each group index in the wake-up data. In this way, the terminal device may determine, by parsing the wake-up data, that the value of the indication bit of a 4-th group index in the wake-up data is 1, and may determine that the base station is to wake up a terminal device in the 4-th group.

In the embodiments of the present disclosure, the wake-up signal further includes the wake-up data in addition to the wake-up preamble. Thus, the terminal device may determine whether the second receiver needs to be turned on based on the wake-up data in the wake-up signal, instead of keeping the second receiver to be turned on all the time. In this way, the second receiver of the terminal device is in an off-state for a long time, and in the on-state only when needed, thereby meeting the low-power consumption requirement of the terminal device.

It can be understood that in order to achieve the functions mentioned above, the communication apparatus includes corresponding hardware structures and/or software modules for performing respective functions. The skilled in this art should easily realize that, the algorithm steps of the respective examples described in conjunction with the disclosed embodiments herein can be implemented in hardware or a combination of hardware and computer software, in the embodiments of the present disclosure. Whether a certain function is executed by hardware or by computer software driving hardware, depends on the specific application and design constraints of the technical solution. Professional technicians may use a different method for each specific application, to implement the described function, but such implementation should not be considered beyond the scope of the present disclosure.

The embodiments of the present disclosure may divide the communication apparatus into functional modules according to the method embodiments mentioned above. For example, one function may be divided into one functional module correspondingly, or two or more functions may be integrated into one functional module. The integrated module mentioned above may be implemented in both hardware and software forms. It should be noted that the division of modules in the embodiments of the present disclosure is schematic and only a logical functional division. In actual implementations, there may be other divisions. Dividing into one functional module corresponding to each function is taken as an example for illustration below.

FIG. 12 is a structural schematic diagram of a base station provided in the embodiments of the present disclosure. As shown in FIG. 12, the base station includes a processing module 1201 and a communication module 1202.

The processing module 1201 is configured to generate a wake-up signal, where the wake-up signal includes a wake-up preamble and wake-up data.

The communication module 1202 is configured to send the wake-up signal.

In some embodiments, the wake-up data includes at least one of information as follows: short information, a terminal index, a group index or a cell index.

In some embodiments, the short information includes at least one of types as follows: a system message change indication, a warning information indication, or a stop detection indication.

In some embodiments, the terminal index includes any one of: all or a part of bits of a 5G-TMSI, all or a part of bits of a 5G-S-TMSI, all or a part of bits of an RNTI, or a wake-up identity. The RNTI includes any one of: a wake-up-specific RNTI, a UE-specific RNTI, a UE-specific RNTI for waking up, a UE-specific RNTI for an idle state, a UE-specific RNTI used in an idle state in a most recently connected cell, a UE-specific RNTI used for waking up in a most recently connected cell, or an inactive RNTI.

In some embodiments, the wake-up data further includes at least one of: an interval identity, an ending identity, a sub-preamble, or a check code.

In some embodiments, in a case where the wake-up data includes N terminal indexes, there is at least one of the interval identity, the ending identity or the check code spacing every K terminal indexes in the wake-up data; N is greater than or equal to K, and both N and K are positive integers.

In some embodiments, the cell index includes all or a part of bits of a base station identity, or all or a part of bits of a physical layer cell identity.

In some embodiments, the information in the wake-up data is mapped according to priorities; an order of the priorities from high to low is: the short information, the cell index, the group index, and the terminal index; or an order of the priorities from high to low is: the short information, and the group index; or an order of the priorities from high to low is: the short information, and the terminal index; or an order of the priorities from high to low is: the short information, the group index, and the terminal index.

In some embodiments, a length and/or a bit sequence of the wake-up preamble is used to indicate the information carried in the wake-up data.

In some embodiments, the wake-up signal further includes at least one of first wake-up indication information, second wake-up indication information and third wake-up indication information; the first wake-up indication information is used to indicate the information carried in the wake-up data; the second wake-up indication information is used to indicate an ending position of the wake-up data; or the third wake-up indication information is used to verify the wake-up data.

In some embodiments, the first wake-up indication information includes at least one of first indication information, second indication information, third indication information, fourth indication information, fifth indication information, sixth indication information or seventh indication information; the first indication information is used to indicate whether the wake-up data carries the short information; the second indication information is used to indicate whether the wake-up data carries the terminal index; the third indication information is used to indicate whether the wake-up data carries the group index; the fourth indication information is used to indicate whether the wake-up data carries the cell index; the fifth indication information is used to indicate a type of the short information carried in the wake-up data; the sixth indication information is used to indicate a number of terminal indexes carried in the wake-up data; or the seventh indication information is used to indicate a grouping type corresponding to the group index carried in the wake-up data.

In some embodiments, the grouping type includes one or more of: grouping based on a core network (Core Network, CN); grouping based on a preset terminal index; or grouping based on a CN and a preset terminal index.

In some embodiments, the first wake-up indication information includes eighth indication information, and there is a correspondence between a value of the eighth indication information and an information combination of the wake-up data; the information combination includes at least one of the short information, the terminal index, the group index or the cell index.

In some embodiments, the first wake-up indication information includes ninth indication information, and there is a correspondence between a value of the ninth indication information and a transmission format of the wake-up data; the transmission format includes at least one of a transmission rate, a bitrate, a length, or a content of the wake-up data.

In some embodiments, the wake-up data further includes a data content indication. The data content indication includes at least one of types as follows: a data transmission format indication, a data type indication, a data length indication, a terminal index number indication, a grouping type indication corresponding to a group index, a data repetition number indication, a data bitrate indication, a data modulation scheme indication, or a data transmission rate indication.

In some embodiments, the information in the wake-up data is mapped according to priorities. An order of the priorities from high to low is: the data content indication, the short information, the group index, and the terminal index; or an order of the priorities from high to low is: the data content indication, the short information, and the terminal index; or an order of the priorities from high to low is: the data content indication, and the terminal index; or an order of the priorities from high to low is: the data content indication, the short information, the cell index, the group index, and the terminal index.

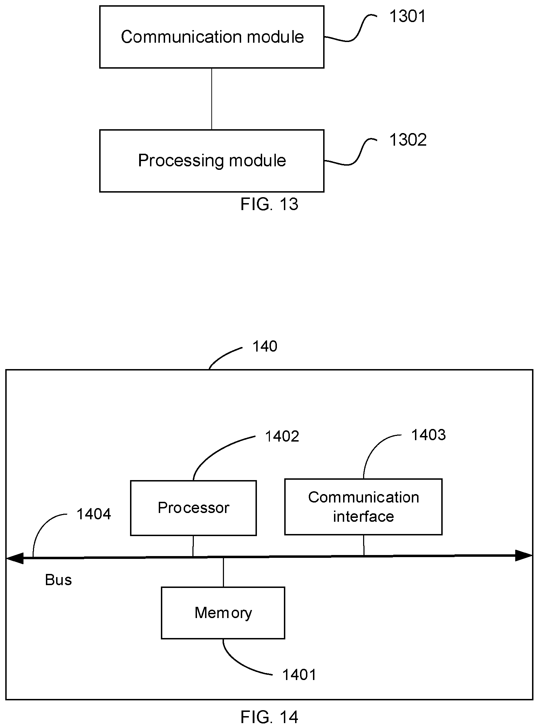

FIG. 13 is a structural schematic diagram of a terminal device provided in the embodiments of the present disclosure. As shown in FIG. 13, the terminal device includes a communication module 1301 and a processing module 1302. The communication module 1301 may include a first receiver and a second receiver.

The communication module 1301 is configured to receive a wake-up signal by the first receiver, and the wake-up signal includes a wake-up preamble and wake-up data.

The processing module 1302 is configured to determine a working mode of the second receiver according to the wake-up signal.

In some embodiments, the wake-up data includes at least one of information as follows: short information, a terminal index, a group index or a cell index.

In some embodiments, the short information includes at least one of types as follows: a system message change indication, a warning information indication, or a stop detection indication.

In some embodiments, the terminal index includes any one of: all or a part of bits of a 5G-TMSI, all or a part of bits of a 5G-S-TMSI, all or a part of bits of: a wake-up-specific RNTI, a wake-up identity, a UE-specific RNTI, a UE-specific RNTI for waking up, a UE-specific RNTI for an idle state, a UE-specific RNTI used in an idle state in a most recently connected cell, a UE-specific RNTI used for waking up in a most recently connected cell, or an inactive RNTI.

In some embodiments, the wake-up data further includes at least one of: an interval identity, an ending identity, a sub-preamble, or a check code.

In some embodiments, in a case where the wake-up data includes N terminal indexes, there is at least one of the interval identity, the ending identity or the check code spacing every K terminal indexes in the wake-up data; N is greater than or equal to K, and both N and K are positive integers.

In some embodiments, the cell index includes all or a part of bits of a base station identity, or all or a part of bits of a physical layer cell identity.

In some embodiments, the processing module 1302 is configured to determine the information in the wake-up data according to priorities of the information; an order of the priorities from high to low is: the short information, the cell index, the group index, and the terminal index; or an order of the priorities from high to low is: the short information, and the group index; or an order of the priorities from high to low is: the short information, and the terminal index; or an order of the priorities from high to low is: the short information, the group index, and the terminal index.

In some embodiments, the information carried in the wake-up data is determined by a length and/or a bit sequence of the wake-up preamble.

In some embodiments, the wake-up signal further includes at least one of first wake-up indication information, second wake-up indication information and third wake-up indication information; and the processing module 1302 is configured to perform at least one of operations as follows: determining the information carried in the wake-up data by the first wake-up indication information; determining an ending position of the wake-up data by the second wake-up indication information; and verifying the wake-up data by the third wake-up indication information.

In some embodiments, the first wake-up indication information includes at least one of first indication information, second indication information, third indication information, fourth indication information, fifth indication information, sixth indication information or seventh indication information; and the processing module 1302 is configured to perform at least one of operations as follows: determining whether the wake-up data carries the short information by the first indication information; determining whether the wake-up data carries the terminal index by the second indication information; determining whether the wake-up data carries the group index by the third indication information; determining whether the wake-up data carries the cell index by the fourth indication information; determining a type of the short information carried in the wake-up data by the fifth indication information; determining a number of terminal indexes carried in the wake-up data by the sixth indication information; and determining a grouping type corresponding to the group index carried in the wake-up data by the seventh indication information.

In some embodiments, the grouping type includes one or more of: grouping based on a CN; grouping based on a preset terminal index; or grouping based on a CN and a preset terminal index.

In some embodiments, the first wake-up indication information includes eighth indication information; and the processing module 1302 is configured to determine an information combination of the wake-up data by a value of the eighth indication information, and a correspondence between the eighth indication information and the information combination of the wake-up data; and the information combination includes at least one of the short information, the terminal index, the group index or the cell index.

In some embodiments, the first wake-up indication information includes ninth indication information; and the processing module 1302 is configured to determine a transmission format of the wake-up data by a value of the ninth indication information, and a correspondence between the ninth indication information and the transmission format of the wake-up data; and the transmission format includes at least one of a transmission rate, a bitrate, a length, or a content of the wake-up data.

In some embodiments, the processing module 1302 is configured to turn on the second receiver in a case where the wake-up data carries at least one of a terminal index of the terminal device itself, a cell index of a cell accessed by the terminal device, a group index of a group to which the terminal device belongs, a system message change indication, or a warning information indication.

In some embodiments, the wake-up data further includes a data content indication. The data content indication includes at least one of types as follows: a data transmission format indication, a data type indication, a data length indication, a terminal index number indication, a grouping type corresponding to a group index, a data repetition number indication, a data bitrate indication, a data modulation scheme, or a data transmission rate indication.

In some embodiments, the information in the wake-up data is mapped according to priorities; and an order of the priorities from high to low is: the data content indication, the short information, the group index, and the terminal index; or an order of the priorities from high to low is: the data content indication, the short information, and the terminal index; or an order of the priorities from high to low is: the data content indication, and the terminal index; or an order of the priorities from high to low is: the data content indication, the short information, the cell index, the group index, and the terminal index.

In a case where the functions of the integrated modules mentioned above are implemented in the form of hardware, a structure of the base station and a structure of the terminal device provided in the embodiments of the present disclosure may refer to a structure of a communication apparatus shown in FIG. 14. As shown in FIG. 14, a communication apparatus 140 includes a processor 1402 and a bus 1404. Optionally, the wake-up signal sending apparatus may further include a memory 1401. Optionally, the wake-up signal sending apparatus may further include a communication interface 1403.

The processor 1402 may implement or perform various exemplary logical blocks, modules and circuits described in conjunction with the contents of the present disclosure. The processor 1402 may be a central processor, a general-purpose processor, a digital signal processor, an application specific integrated circuit, a field programmable gate array, or other programmable logic devices, a transistor logic device, a hardware component, or any combination thereof. The processor 1402 may also be a combination that implements computing functions, for example, including a combination of one or more microprocessors, a combination of a digital signal processor (Digital Signal Processor, DSP) and a microprocessor, etc.

The communication interface 1403 is configured to connect to other devices via a communication network. The communication network may be the Ethernet, wireless access network, or wireless local area networks (WLAN), etc.

The memory 1401 may be a read-only memory (Read-Only Memory, ROM), or other types of a static storage device that may store static information and instructions, a random access memory (Random Access Memory, RAM), or other types of a dynamic storage device that may store information and instructions, or an electrically erasable programmable read-only memory (Electrically Erasable Programmable Read-Only Memory, EEPROM), a magnetic disk storage medium or other magnetic storage devices, or any other medium that can be used to carry or store desired program codes in the form of instructions or data structures and can be accessed by a computer, but which is not limited thereto.

As a possible implementation, the memory 1401 may exist independently of the processor 1402, and the memory 401 may be connected to the processor 1402 via the bus 1404, and used for storing instructions or program codes. When invoking and executing the instructions or program codes stored in the memory 1401, the processor 1402 can implement the wake-up signal sending method provided by the embodiments of the present disclosure.

In another possible implementation, the memory 1401 may also be integrated with the processor 1402.

The bus 1404 may be an extended industry standard architecture (Extended Industry Standard Architecture, EISA) bus, etc. The bus 1404 may be divided into an address bus, a data bus, a control bus, and so on. For ease of representation, only one bold line is used for the representation in FIG. 14, but it does not mean that there is only one bus or one type of the bus.

Some embodiments of the present disclosure provide a computer readable storage medium (for example, a non-transitory computer readable storage medium), the computer readable storage medium has stored computer program instructions thereon, and the computer program instructions, when executed on a computer, cause the computer to perform the method of any one of the above embodiments.

Exemplarily, the above computer readable storage medium may include, but is not limited to: a magnetic storage device (e.g., a hard disk, a floppy disk, or a magnetic tape, etc.), an optical disk (e.g., a compact disk (Compact Disk, CD), a digital versatile disk (Digital Versatile Disk, DVD), etc.), a smart card or a flash memory device (e.g., an erasable programmable read-only memory (Erasable Programmable Read-Only Memory, EPROM), a card, a stick or a key drive, etc.). The various computer readable storage media described in the embodiments of the present disclosure may represent one or more devices for storing information and/or other machine readable storage media for storing information. The term "machine readable storage medium" may include, but is not limited to, a wireless channel and various other media capable of storing, containing, and/or carrying instructions and/or data.

Some embodiments of the present disclosure provide a computer program product containing instructions, and the computer program product, when executed on a computer, causes the computer to perform the method of any one of the above embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined by the protection scope of the claims.

## Claims

1. A wake-up signal sending method, comprising:
generating a wake-up signal, wherein the wake-up signal comprises a wake-up preamble and wake-up data; and
sending the wake-up signal.

2. The method according to claim 1, wherein the wake-up data comprises at least one of information as follows: short information, a terminal index, a group index or a cell index.

3. The method according to claim 2, wherein the short information comprises at least one of types as follows: a system message change indication, a warning information indication, or a stop detection indication.

4. The method according to claim 2, wherein the terminal index comprises any one of: all or a part of bits of a 5G-temporary mobile subscriber identity, 5G-TMSI, all or a part of bits of a 5G-shortened form-temporary mobile subscriber identity, 5G-S-TMSI, all or a part of bits of a radio network temporary identity, RNTI, or a wake-up identity; and
the RNTI comprises any one of: a wake-up-specific RNTI, a user equipment, UE,-specific RNTI, a UE-specific RNTI for waking up, a UE-specific RNTI for an idle state, a UE-specific RNTI used in an idle state in a most recently connected cell, a UE-specific RNTI used for waking up in a most recently connected cell, or an inactive RNTI.

5. The method according to claim 2, wherein the cell index comprises all or a part of bits of a base station identity, or all or a part of bits of a physical layer cell identity.

6. The method according to claim 2, wherein the information in the wake-up data is mapped according to priorities;
an order of the priorities from high to low is: the short information, the cell index, the group index, and the terminal index; or
an order of the priorities from high to low is: the short information, and the group index; or
an order of the priorities from high to low is: the short information, and the terminal index; or
an order of the priorities from high to low is: the short information, the group index, and the terminal index.

7. The method according to any one of claims 2 to 6, wherein a length and/or a bit sequence of the wake-up preamble is used to indicate the information carried in the wake-up data.

8. The method according to any one of claims 2 to 6, wherein the wake-up signal further comprises at least one of first wake-up indication information, second wake-up indication information and third wake-up indication information;
the first wake-up indication information is used to indicate the information carried in the wake-up data;
the second wake-up indication information is used to indicate an ending position of the wake-up data; or
the third wake-up indication information is used to verify the wake-up data.

9. The method according to claim 8, wherein the first wake-up indication information comprises at least one of first indication information, second indication information, third indication information, fourth indication information, fifth indication information, sixth indication information or seventh indication information; wherein
the first indication information is used to indicate whether the wake-up data carries the short information;
the second indication information is used to indicate whether the wake-up data carries the terminal index;
the third indication information is used to indicate whether the wake-up data carries the group index;
the fourth indication information is used to indicate whether the wake-up data carries the cell index;
the fifth indication information is used to indicate a type of the short information carried in the wake-up data;
the sixth indication information is used to indicate a number of terminal indexes carried in the wake-up data; or
the seventh indication information is used to indicate a grouping type corresponding to the group index carried in the wake-up data.

10. The method according to claim 9, wherein the grouping type comprises one or more of:
grouping based on a core network, CN;
grouping based on a preset terminal index; or
grouping based on a CN and a preset terminal index.

11. The method according to claim 8, wherein the first wake-up indication information comprises eighth indication information, and there is a correspondence between a value of the eighth indication information and an information combination of the wake-up data; wherein the information combination comprises at least one of the short information, the terminal index, the group index or the cell index.

12. The method according to claim 8, wherein the first wake-up indication information comprises ninth indication information, and there is a correspondence between a value of the ninth indication information and a transmission format of the wake-up data; wherein the transmission format comprises at least one of a transmission rate, a bitrate, a length, a repetition number, a modulation scheme or a content of the wake-up data.

13. The method according to claim 8, wherein the first wake-up indication information is mapped before the wake-up data.

14. The method according to claim 8, wherein the second wake-up indication information and/or the third wake-up indication information is mapped after the wake-up data.

15. The method according to any one of claims 2 to 6, wherein the wake-up data further comprises a data content indication.

16. The method according to claim 15, wherein the data content indication comprises at least one of types as follows: a data transmission format indication, a data type indication, a data length indication, a terminal index number indication, a grouping type indication corresponding to a group index, a data repetition number indication, a data bitrate indication, a data modulation scheme indication, or a data transmission rate indication.

17. The method according to claim 15, wherein the information in the wake-up data is mapped according to priorities;
an order of the priorities from high to low is: the data content indication, the short information, the group index, and the terminal index; or
an order of the priorities from high to low is: the data content indication, the short information, and the terminal index; or
an order of the priorities from high to low is: the data content indication, and the terminal index; or
an order of the priorities from high to low is: the data content indication, the short information, the cell index, the group index, and the terminal index.

18. The method according to any one of claims 2 to 6, wherein the wake-up data further comprises at least one of: an interval identity, an ending identity, a sub-preamble, or a check code.

19. The method according to claim 18, wherein in a case where the wake-up data comprises N terminal indexes, there is at least one of the interval identity, the ending identity or the check code spacing every K terminal indexes in the wake-up data; N is greater than or equal to K, and both N and K are positive integers.

20. A wake-up signal receiving method, comprising:
receiving a wake-up signal by a first receiver, wherein the wake-up signal comprises a wake-up preamble and wake-up data; and
determining a working mode of a second receiver according to the wake-up signal.

21. The method according to claim 20, wherein the wake-up data comprises at least one of information as follows: short information, a terminal index, a group index or a cell index.

22. The method according to claim 21, wherein the short information comprises at least one of types as follows: a system message change indication, a warning information indication, or a stop detection indication.

23. The method according to claim 21, wherein the terminal index comprises any one of: all or a part of bits of a 5G-temporary mobile subscriber identity, 5G-TMSI, all or a part of bits of a 5G-shortened form-temporary mobile subscriber identity, 5G-S-TMSI, all or a part of bits of a radio network temporary identity, RNTI, or a wake-up identity; and
the RNTI comprises any one of: a wake-up-specific RNTI, a user equipment, UE, - specific RNTI, a UE-specific RNTI for waking up, a UE-specific RNTI for an idle state, a UE-specific RNTI used in an idle state in a most recently connected cell, a UE-specific RNTI used for waking up in a most recently connected cell, or an inactive RNTI.

24. The method according to claim 21, wherein the cell index comprises all or a part of bits of a base station identity, or all or a part of bits of a physical layer cell identity.

25. The method according to claim 21, wherein the information in the wake-up data is determined according to priorities of the information:
an order of the priorities from high to low is: the short information, the cell index, the group index, and the terminal index; or
an order of the priorities from high to low is: the short information, and the group index; or
an order of the priorities from high to low is: the short information, and the terminal index; or
an order of the priorities from high to low is: the short information, the group index, and the terminal index.

26. The method according to any one of claims 21 to 25, wherein the information carried in the wake-up data is determined by a length and/or a bit sequence of the wake-up preamble.

27. The method according to any one of claims 21 to 25, wherein the wake-up signal further comprises at least one of first wake-up indication information, second wake-up indication information and third wake-up indication information;
wherein the information carried in the wake-up data is determined by the first wake-up indication information;
an ending position of the wake-up data is determined by the second wake-up indication information; or
the wake-up data is verified by the third wake-up indication information.

28. The method according to claim 27, wherein the first wake-up indication information comprises at least one of first indication information, second indication information, third indication information, fourth indication information, fifth indication information, sixth indication information or seventh indication information;
whether the wake-up data carries the short information is determined by the first indication information;
whether the wake-up data carries the terminal index is determined by the second indication information;
whether the wake-up data carries the group index is determined by the third indication information;
whether the wake-up data carries the cell index is determined by the fourth indication information;
a type of the short information carried in the wake-up data is determined by the fifth indication information;
a number of terminal indexes carried in the wake-up data is determined by the sixth indication information; and
a grouping type corresponding to the group index carried in the wake-up data is determined by the seventh indication information.

29. The method according to claim 28, wherein the grouping type comprises one or more of:
grouping based on a core network, CN;
grouping based on a preset terminal index; or
grouping based on a CN and a preset terminal index.

30. The method according to claim 27, wherein the first wake-up indication information comprises eighth indication information;
an information combination of the wake-up data is determined by a value of the eighth indication information, and a correspondence between the eighth indication information and the information combination of the wake-up data; and
the information combination comprises at least one of the short information, the terminal index, the group index or the cell index.

31. The method according to claim 27, wherein the first wake-up indication information comprises ninth indication information;
a transmission format of the wake-up data is determined by a value of the ninth indication information, and a correspondence between the ninth indication information and the transmission format of the wake-up data; wherein the transmission format comprises at least one of a transmission rate, a bitrate, a length, a modulation scheme, a repetition number or a content of the wake-up data.

32. The method according to any one of claims 21 to 25, wherein the wake-up data further comprises a data content indication.

33. The method according to claim 32, wherein the data content indication comprises at least one of types as follows: a data transmission format indication, a data type indication, a data length indication, a terminal index number indication, a grouping type indication corresponding to a group index, a data repetition number indication, a data bitrate indication, a data modulation scheme indication, or a data transmission rate indication.

34. The method according to claim 32, wherein the information in the wake-up data is determined according to priorities of the information:
an order of the priorities from high to low is: the data content indication, the short information, the group index, and the terminal index; or
an order of the priorities from high to low is: the data content indication, the short information, and the terminal index; or
an order of the priorities from high to low is: the data content indication, and the terminal index; or
an order of the priorities from high to low is: the data content indication, the short information, the cell index, the group index, and the terminal index.

35. The method according to any one of claims 21 to 25, wherein the wake-up data further comprises at least one of: an interval identity, an ending identity, a sub-preamble, or a check code.

36. The method according to claim 35, wherein in a case where the wake-up data comprises N terminal indexes, there is at least one of the interval identity, the ending identity or the check code spacing every K terminal indexes in the wake-up data; N is greater than or equal to K, and both N and K are positive integers.

37. The method according to claim 20, wherein determining the working mode of the second receiver according to the wake-up signal, comprises:
turning on the second receiver in a case where the wake-up data carries at least one of a terminal index corresponding to a terminal, a cell index of a cell accessed by the terminal, a group index of a group to which the terminal belongs, a system message change indication, or a warning information indication.

38. A communication apparatus, comprising a processor, wherein the processor, when executing a computer program, implements the wake-up signal sending method according to any one of claims 1 to 19, or the wake-up signal receiving method according to any one of claims 20 to 37.

39. A computer-readable storage medium, comprising computer instructions; wherein the computer instructions, when executed, implement the wake-up signal sending method according to any one of claims 1 to 19, or the wake-up signal receiving method according to any one of claims 20 to 37.
